(19) Europäisches Patentamt
European Patent Office
Office européen des brevets

(11) Veröffentlichungsnummer: **0 281 905**
**A2**

(12) **EUROPÄISCHE PATENTANMELDUNG**

(21) Anmeldenummer: **88103105.8**

(22) Anmeldetag: **02.03.88**

(51) Int. Cl.⁴: **C08L 75/08**, C08G 18/18, C09J 3/14, C09D 3/72, B29C 39/00, //(C08L75/08, 81:04,57:06)

Die Bezeichnung der Erfindung wurde geändert (Richtlinien für die Prüfung im EPA, A-III, 7.3).

(30) Priorität: **07.03.87 DE 3707350**

(43) Veröffentlichungstag der Anmeldung: **14.09.88 Patentblatt 88/37**

(84) Benannte Vertragsstaaten: **AT BE CH DE ES FR GB GR IT LI LU NL SE**

(71) Anmelder: **Teroson GmbH**
**Hans-Bunte-Strasse 4**
**D-6900 Heidelberg 1(DE)**

(72) Erfinder: **Grimm, Stefan**
**Brahmsstrasse 8**
**D-6904 Eppelheim(DE)**
Erfinder: **Schätzle, Michael**
**Kleegartenstrasse 22**
**D-6902 Sandhausen(DE)**
Erfinder: **Stahr, Fritz**
**Rosenstrasse 84**
**D-6800 Mannheim 24(DE)**

(74) Vertreter: **UEXKÜLL & STOLBERG**
**Patentanwälte**
**Beselerstrasse 4**
**D-2000 Hamburg 52(DE)**

(54) **Härtbare Zweikomponentenmasse auf Basis eines Prepolymeren mit Isocyanatgruppen und eines Prepolymeren mit Mercaptogruppen und Verwendung dieser Masse.**

(57) Es wird eine Zweikomponentenmasse auf Basis von härtbaren Präpolymeren sowie üblichen Zusätzen beschrieben, die im Unterschied zu herkömmlichen Zweikomponentenmassen in beiden Einzelkomponenten härtbares Präpolymer enthält, wobei das Präpolymer in der ersten Komponente ein Polyurethanpräpolymer mit freien NCO-Gruppen ist und das Präpolymer in der zweiten Komponente ein Polymer mit freien SH-Gruppen ist. Die 1. Komponente enthält Härter und gegebenenfalls Beschleuniger für das Polymer mit freien SH-Gruppen, und die 2. Komponente enthält Härter und gegebenenfalls Beschleuniger für das Polyurethanpräpolymer mit freien NCO-Gruppen. Durch die Verwendung von zwei Präpolymeren können die beiden Komponenten der Zweikomponentenmasse in einem für praktische Zwecke günstigen Volumenverhältnis verwendet werden. Außerdem können Viskosität und Dichte der beiden Einzelkomponenten auf etwa gleiche Werte eingestellt werden, so daß die Vermischung der beiden Komponenten unproblematisch ist. Die beschriebenen Zweikomponentenmassen härten sehr schnell aus und sind gegenüber Dosier-und Mischfehlern wenig empfindlich. Darüber hinaus liefern die beschriebenen Zweikomponentenmassen im ausgehärteten Zustand bei gegebener Elastizität hohe Festigkeiten. Die beschriebenen Zweikomponentenmassen eignen sich insbesondere als Dichtstoff, Klebstoff, Beschichtungsmassen und Gießmassen.

EP 0 281 905 A2

## Zweikomponentenmasse und deren Verwendung

Die Erfindung betrifft eine Zweikomponentenmasse auf Basis von härtbaren Präpolymeren sowie üblichen Zusätzen und deren Verwendung.

Chemisch härtende Zweikomponentenmassen sind seit langem bekannt. Im allgemeinen besteht die erste Komponente derartiger Massen aus einem Präpolymer und Zusätzen bzw. Zuschlagstoffen, während die zweite Komponente aus Härter und gegebenenfalls Beschleuniger sowie Zusätzen bzw. Zuschlagstoffen besteht. Da der Härter in der Regel entweder aus hochreaktiven niedermolekularen organischen Verbindungen oder aus anorganischen Oxydationsmitteln besteht, beträgt das Mischungsverhältnis (Gewichts-oder Volumenteile) üblicherweise etwa 10:1, d.h. es ist ein erheblicher Überschuß der ersten Komponente erforderlich. Die Handhabung derartiger Massen in Bezug auf Misch-, Dosier-und Fördertechnik gehört zum Stand der Technik. Ein ausgeglicheneres Mischungsverhältnis von erster zu zweiter Komponente und insbesondere ein Mischungsverhältnis von 1:1 wäre jedoch wesentlich einfacher einzustellen, sicherer zu handhaben und würde zu einer besseren Mischungsqualität (gleichmäßigere Durchmischung und damit Verteilung der Komponenten) führen.

Einkomponentenmassen, die nach der Aushärtung hochfeste und elastische Verbindungen ergeben, sind ebenfalls seit langem bekannt. Diese härten an der Luft durch Feuchtigkeit oder Oxydation aus. Die Aushärtungsgeschwindigkeit hängt dabei von der Zahl der reaktiven Gruppen pro Volumeneinheit, der Art der Zuschlagstoffe bzw. Zusätze und Katalysatoren ab. Selbst bei als schnellhärtend zu bezeichnenden Systemen ist aber die Aushärtungsgeschwindigkeit für den industriellen Einsatz zu langsam. Hohe Festigkeiten bei hoher Elastizität hängen ab von der Polymerart, der Anzahl der reaktiven Gruppen pro Volumeneinheit, der Pigment-Volumenkonzentration und der Art der Zusätze bzw. Zuschlagstoffe. Üblicherweise liegt der Polymergehalt derartiger Einkomponentenmassen über 50%.

Der Erfindung liegt dementsprechend die Aufgabe zugrunde, eine bei Normalklima schnellhärtende Zweikomponentenmasse mit einem werkstattgerechten Mischungsverhältnis insbesondere von etwa 1:1 Volumenteilen und mit einer für die problemlose Verarbeitung geeigneten Viskosität zu schaffen, die nicht nur schnell, sondern auch gleichmäßig aushärtet und im ausgehärteten Zustand die Festigkeit und Elastizität einer entsprechenden ausgehärteten Einkomponentenmasse aufweist.

Zur Lösung dieser Aufgabe wird eine Zweikomponentenmasse gemäß Patentanspruch 1 vorgeschlagen. Bevorzugte Ausführungsformen der Erfindung ergeben sich aus den Unteransprüchen und der nachfolgenden Beschreibung. Darüber hinaus ist Gegenstand der Erfindung die Verwendung der erfindungsgemäßen Zweikomponentenmasse als Dichtstoff, Klebstoff, Beschichtungsmasse und Gießmasse.

Die wesentlichen Vorteile der erfindungsgemäßen Zweikomponentenmasse liegen in der schnellen Härtung, dem für praktische Zwecke vorteilhaften Mischungsverhältnis von insbesondere etwa 1:1 und der damit verbundenen geringen Empfindlichkeit gegenüber Dosierfehlern und der hohen Festigkeit und Elastizität im ausgehärteten Zustand. Hinzu kommt, daß die Viskosität und die Dichte der Einzelkomponenten erfindungsgemäß etwa gleich eingestellt werden können, was sich günstig auf die Verarbeitbarkeit der Zweikomponentenmasse auswirkt und somit aufgrund der verhältnismäßig einfach zu erreichenden homogenen Vermischung der beiden Komponenten zur angestrebten schnellen Härtung beiträgt. Aufgrund dieser Eigenschaften ist die erfindungsgemäße Zweikomponentenmasse sehr gut für den industriellen Einsatz bei kurzen Taktzeiten geeignet.

Die Härtung der in den beiden Komponenten der erfindungsgemäßen Zweikomponentenmasse enthaltenen Präpolymere erfolgt mit verschiedenen Härtern und gegebenenfalls Beschleunigern, wobei das eine Präpolymer jeweils gegenüber dem Härter/Beschleuniger für das andere Präpolymer inert sein muß, d.h. mit dem Härter/Beschleuniger für das andere Präpolymer nicht reagiert. Die dadurch mögliche Verwendung von zwei verschiedenen Präpolymeren erlaubt die Verwendung praktisch gleich großer Mengen von erster und zweiter Komponente, so daß die oben geschilderten Probleme vom zum Stand der Technik gehörenden Zweikomponentenmassen ausgeschaltet sind.

Die beiden verschiedenen Präpolymere reagieren aber nicht nur mit dem jeweils in der anderen Komponente vorhandenen Härter, sondern auch miteinander. Dies liefert den zusätzlichen Vorteil, daß die Dosierung der Härter wenig kritisch ist und Dosier-und Mischfehler noch weniger ins Gewicht fallen, d.h. keine oder nur geringfügige Auswirkungen auf das ausgehärtete Produkt haben.

Erfindungsgemäß geeignete Polyurethanpräpolymere, beispielsweise Polyether-und/oder Polyesterurethanpräpolymere, sind dem Fachmann geläufig und werden durch Umsetzung von Polyolen mit überschüssigem Polyisocyanat hergestellt. Besonders bevorzugte Polyurethanpräpolymere für die erfin dungsgemäße Zweikomponentenmasse sind Umsetzungsprodukte von Polyethylenpropylenethertriolen

$$C_3H_5\{O(CH_2\overset{\overset{CH_3}{|}}{C}HO)_m\ (CH_2CH_2O)_nH\}_3$$

mit Diisocyanaten, insbesondere 4,4-Diphenylmethandiisocyanat (MDI). Das Molekulargewicht der besonders geeigneten Polyethylenpropylenethertriole liegt im Bereich von 2.000 bis 10.000 und vorzugsweise 4.000 bis 7.000, wobei der Ethylenoxidgehalt vorzugsweise geringer ist als der Propylenoxidgehalt und insbesondere 5 bis 20 und bevorzugt etwa 10 Gew.% beträgt. Die Viskosität der bevorzugten Polyethylenpropylenethertriole soll vorzugsweise im Bereich von 800 bis 2.000 mPas (25°C) und insbesondere 1.100 bis 1.400 mPas liegen.

Auch die für die zweite Komponente geeigneten Polymeren mit freien SH-Gruppen sind dem Fachmann geläufig und in großer Vielfältigkeit im Handel erhältlich. Von diesen zum Stand der Technik gehörenden Polymeren sind erfindungsgemäß insbesondere solche bevorzugt, wie sie z.B. in der US-PS 3 923 748 (Warenzeichen PERMAPOL®, z.B. P-805) und der DE-OS 35 08 428 (Warenzeichen BAYTHIOL) beschrieben sind.

Wie bei den oben erwähnten Einkomponentenmassen liegt auch bei der erfindungsgemäßen Zweikomponentenmasse der Polymergehalt der Gesamtmischung vorzugsweise bei 50 Gew.% oder mehr. Im ausgehärteten Zustand werden dadurch die erforderlichen Festigkeiten in Kombination mit der angestrebten Elastizität erreicht.

Die Auswahl und Kombination von geeigneten Härtern, Beschleunigern, Alterungsschutzmitteln, Haftvermittlern, Weichmachern, Füllstoffen und sonstigen üblichen Zusätzen bzw. Zuschlagstoffen stellt für den Fachmann kein Problem dar. So können als Härter für das Polymer mit freien SH-Gruppen die üblicherweise verwendeten anorganischen oder organischen Oxidationsmittel verwendet werden. Bevorzugt ist $MnO_2$. Als Härter für das Polyurethanpräpolymer mit freien NCO-Gruppen dienen üblicherweise Wasser und/oder Polyole. Bevorzugte Füllstoffe sind Ruße und unbeschichtete Kreiden, die bei Verwendung in der ersten Komponente selbstverständlich getrocknet sein müssen. Als Alterungsschutzmittel kommen die in Polyurethanen üblicherweise verwendeten Mittel in Frage. Bevorzugt sind Mischungen aus sterisch gehindertem Amin und sterisch gehindertem Phenol. Als Weichmacher für die erste Komponente werden wiederum die üblichen Polyurethanweichmacher und vorzugsweise Phthalate eingesetzt. Beispiele für Weichmacher, die sich für die zweite Komponente eignen, sind Poly-$\alpha$-methylstyren, Chlorparaffine und wiederum bevorzugt Phthalate. Als Beschleuniger sind für beide Komponenten organische Metallverbindungen geeignet, wobei Salze der Ethylhexansäure (Oktoate) bevorzugt sind.

Die Herstellung der beiden Komponenten erfolgt in der für reaktive Einkomponentenmassen üblichen Weise. Dabei erweist sich die Verwendung von Inertgas als vorteilhaft. Auch dies ist dem Fachmann jedoch wohl geläufig, so daß sich weitere Erläuterungen erübrigen. Die beiden Komponenten der erfindungsgemäßen Zweikomponentenmasse werden unmittelbar vor ihrer Anwendung miteinander vermischt, wie das auch bei zum Stand der Technik gehörenden Zweikomponentenmassen der Fall ist. Das Mischungsverhältnis (Volumenteile) beträgt 0,5:1 bis 1,5:1, vorzugsweise 0,8:1 bis 1,2:1 und insbesondere etwa 1:1.

Im allgemeinen haben sich im Rahmen der Erfindung Komponenten mit den im folgenden wiedergegebenen Zusammensetzungen als sehr gut brauchbar erwiesen (Richtrezepturen):

<u>1. Komponente</u>PU-Präpolymer 30 - 70 Gewichtsteile
Ruß 10 - 30 Gewichtsteile
Kreide 10 - 30 Gewichtsteile
Weichmacher 0 - 30 Gewichtsteile
Alterungsschutzmittel 0,2 - 0,8 Gewichtsteile
Härter/Beschleuniger 0,1 - 1,0 Gewichtsteile

<u>2. Komponente</u>SH-terminiertes Polymer 20 - 50 Gewichtsteile
Ruß 10 - 30 Gewichtsteile
Kreide 10 - 30 Gewichtsteile
Weichmacher 0 - 30 Gewichtsteile
Alterungsschutzmittel 0,2 - 0,8 Gewichtsteile

Härter/Beschleuniger 0,1 - 10,0 Gewichtsteile

Selbstverständlich werden die Mengenanteile der einzelnen Bestandteile der obigen Richtrezepturen je nach vorgesehener Anwendung variiert. Dies ergibt sich auch aus dem nachfolgenden Beispiel, das der näheren Erläuterung der Erfindung dient.

Beispiel

Es wurden jeweils 2 erste und 2 zweite Komponenten mit den in den folgenden Tabellen angegebenen Zusammensetzungen hergestellt.

## 1. Komponente

| | A<br>Gew.% | | B<br>Gew.% |
|---|---|---|---|
| PU-Präpolymer 1 | 70,0 | PU-Präpolymer 2 | 70,0 |
| Ruß, Kreide und Alterungsschutzmittel | 29,7 | Ruß, Kreide und Alterungsschutzmittel | 29,7 |
| $MnO_2$ | 0,3 | $MnO_2$ | 0,3 |
| | 100,0 | | 100,0 |

PU-Präpolymer 1 = Reaktionsprodukt eines Polyethylenpropylenethertriols mit 4,4'-Diphenylmethanisocyanat

PU-Präpolymer 2 = aromatisches Icocyanatpräpolymer mit einem NCO-Gehalt von etwa 2%, einem Äquivalentgewicht von etwa 2100 und einer Viskosität bei 23°C von etwa 30.000 mPa.s.

Alterungsschutzmittel = Mischung aus Pentaerythrityl-tetrakis-[3-(3,5-di-tert.-butyl-4-hydroxyphenyl)-propionat] (Antioxydans) und sterisch gehindertem Amin (Lichtschutzmittel).

## 2. Komponente

| | C Gew.% | | D Gew.% |
|---|---|---|---|
| Präpolymer 3 mit SH-Gruppen | 32,50 | Präpolymer 4 mit SH-Gruppen | 32,50 |
| Weichmacher, Ruß und Kreide | 67,10 | Weichmacher, Ruß und Kreide | 67,10 |
| Wasser | 0,15 | Wasser | 0,15 |
| Sn-II-oktoat | 0,25 | Sn-II-oktoat | 0,25 |
| | 100,00 | | 100,00 |

Präpolymer 3 = flüssiges Polysulfid entsprechend der US-PS 3 923 748 mit einer Dichte von etwa 1,1 g/cm³, einer Brookfield-Viskosität von etwa 2000 dPa.s und einem Äquivalentgewicht von etwa 3200

Präpolymer 4 = aliphatisches Polymer mit endständigen Mercapto-Gruppe mit einem SH-Gehalt von etwa 2%, einer Viskosität bei 23°C von etwa 60.000 mPa.s und einer Dichte bei 20°C von etwa 1,05g/cm³.

Die 1. Komponente A und die 2. Komponente C wurden im Volumenverhältnis 1:1 gemischt. Es wurde eine Masse mit den folgenden Eigenschaften erhalten:

Verarbeitungszeit: etwa 5 Minuten
Shore-A-Härte-Entwicklung:

| Zeit nach Mischvorgang | Shore A |
|---|---|
| 0,5 | 4 |
| 1,0 | 6 |
| 1,5 | 11 |
| 2,0 | 16 |
| 2,5 | 20 |
| 3,0 | 24 |
| 4,0 | 29 |
| 8,0 | 38 |
| 24,0 | 42 |
| 48,0 | 42 |

Zugscherfestigkeitsentwicklung
Prüfkörper Glas/Glas + Primer; Verklebung: 25 × 8 × 5 mm
Zuggeschw. = 50 mm/Min. 23°C 50% rLF

| Zeit nach Mischvorgang (h) | N/mm² |
|---|---|
| 0,5 | 0,1 |
| 1,0 | 0,5 |
| 1,5 | 0,7 |
| 2,0 | 1,0 |
| 24,0 | 4,7 |
| 168,0 | > 5,4 |

Zugfestigkeit nach DIN 53504

| Zeit nach Mischvorgang (d) | N/mm² |
|---|---|
| 1 | > 5,4 |
| 2 | > 5,6 |
| 7 | > 5,6 |

Ferner wurden die 1. Komponente B und die 2. Komponente D ebenfalls im Volumenverhältnis 1:1 gemischt. Es wurde eine Masse mit den folgenden Eigenschaften erhalten:

Verarbeitungszeit: ca. 30 Min.
Shore-A-Härte-Entwicklung

| Zeit nach Mischvorgang (h) | Shore-A |
|---|---|
| 0,5 | n.m. |
| 1,0 | n.m. |
| 1,5 | 0 |
| 2,0 | 0 |
| 2,5 | 1 |
| 3,0 | 2 |
| 4,0 | 5 |
| 8,0 | 12 |
| 24,0 | 44 |
| 48,0 | 46 |

Zugscherfestigkeit bei 23°C (50% rLF)
Prüfkörper Glas/Glas + Primer 24 h 4,8 (N/mm²)
Verklebung 25 × 8 × 5 mm
Zuggeschw. = 100 mm/Min. 7 d > 5,4 (N/mm²)
Zugfestigkeit (23°C/50% rLF) 24 h > 6,0 (N/mm²)
DIN 53504 7 d > 6,4 (N/mm²)

**Ansprüche**

1. Zweikomponentenmasse auf Basis von härtbaren Präpolymeren sowie üblichen Zusätzen, dadurch gekennzeichnet, daß das Volumenverhältnis der ersten zur zweiten Komponente 0,5:1 bis 1,5:1 beträgt, beide Komponenten härtbares Präpolymer enthalten, das Präpolymer in der ersten Komponente ein Polyurethanpräpolymer mit freien NCO-Gruppen ist, das Präpolymer in der zweiten Komponente ein Polymer mit freien SH-Gruppen ist und die erste Komponente Härter und gegebenenfalls Beschleuniger für das Polymer mit freien SH-Gruppen und die zweite Komponente Härter und gegebenenfalls Beschleuniger für das Polyurethanpräpolymer mit freien NCO-Gruppen enthält.

2. Zweikomponentenmasse nach Anspruch 1, dadurch gekennzeichnet, daß das Volumenverhältnis der ersten zur zweiten Komponente 0,8:1 bis 1,2:1 und insbesondere etwa 1:1 beträgt.

3. Zweikomponentenmasse nach Anspruch 1 oder 2, dadurch gekennzeichnet, daß das Polyurethanpräpolymer ein Reaktionsprodukt eines Polyethylenpropylenethertriols mit 4,4'-Diphenylmethandiisocyanat ist.

4. Verwendung der Zweikomponentenmasse gemäß einem der Ansprüche 1 bis 3 als Dichtstoff, Klebstoff, Beschichtungsmasse und Gießmasse.